# FASCICULE DE BREVET EUROPEEN

(11) **EP 3 672 822 B1**
(45) Date de publication et mention de la délivrance du brevet: **14.07.2021**
(21) Numéro de dépôt: 18752586.0
(22) Date de dépôt: 18.07.2018
(51) Int. Cl.: B60K 13/04, F16B 21/09, B60K 15/01, B60K 15/04

(54) **ENSEMBLE D'UNE GOULOTTE DE CARBURANT ET D'UNE GOULOTTE D'UN AGENT LIQUIDE SOLIDARISEES ENSEMBLE**
ANORDNUNG AUS ZUSAMMEN BEFESTIGTEM BRENNSTOFFROHR UND FLÜSSIGMITTELROHR
ASSEMBLY OF A FUEL TUBE AND LIQUID AGENT TUBE FASTENED TOGETHER

(30) Priorité: 22.08.2017 FR 1757787
(43) Date de publication de la demande: 01.07.2020
(73) Titulaire: PSA Automobiles SA, 78300 Poissy (FR)
(72) Inventeur: LE GUYADER, Gael, 28130 Saint-Martin-de-Nigelles (FR)
(86) Numéro de dépôt international: PCT/FR2018/051829
(87) Numéro de publication internationale: WO 2019/038489

(56) Documents cités:
- WO-A1-2013/079881
- DE-A1- 4 023 094
- DE-C1- 4 014 589

## Description

L'invention porte sur un ensemble d'une première goulotte et d'une deuxième goulotte solidarisées ensemble. Ces deux goulottes alimentent deux réservoirs de fluides consommables pour véhicule automobile, avec un premier réservoir équipé de la première goulotte de remplissage et un deuxième réservoir équipé de la deuxième goulotte de remplissage.

Chacune des goulottes est en connexion fluidique avec son réservoir respectif et les goulottes de carburant et d'agent liquide débouchent dans une même zone de remplissage par des ouvertures formant têtes de remplissage, la deuxième goulotte étant fixée au moins provisoirement à la première goulotte dans ou au voisinage de la zone de remplissage par une pièce de solidarisation.

En particulier, mais sans que cela soit limitatif, le premier réservoir de fluide peut être un réservoir d'agent réducteur pour un système de réduction catalytique sélective aussi dénommé système RCS, dénomination qui pourra être utilisée dans ce qui suit pour le désigner de même que pour désigner ses parties constitutives comme réservoir RCS pour le réservoir d'agent réducteur. Le deuxième réservoir peut être un réservoir de carburant. Cependant, dans le domaine automobile, les goulottes selon la présente invention, peuvent alimenter tout autre type de réservoir contenant un fluide.

Donc, dans ce qui va suivre, il va être pris l'exemple d'un réservoir RCS pour décrire la présente invention. Ceci n'est pas limitatif et la présente invention peut concerner un ensemble de deux réservoirs solidarisés de n'importe quel fluide.

Par exemple, dans le cas non limitatif d'un réservoir d'agent réducteur RCS, il a été développé des goulottes de remplissage qui vont se loger par une petite trappe située sur la façade latérale du véhicule, ainsi que des réservoirs RCS situés en partie basse du soubassement du véhicule. Le réservoir RCS se trouve à proximité du réservoir de carburant mais surtout les entrées de leurs goulottes sont reçues dans une même trappe ou dans des trappes voisines. Comme les normes de dépollution deviennent de plus en plus strictes, le réservoir RCS est destiné à être rempli de plus en plus fréquemment.

En prenant toujours comme exemple un réservoir RCS, la plupart des véhicules Diesel fabriqués actuellement vont comporter au moins un réservoir RCS. La ou les goulottes ou tubulures se raccordant au réservoir, et au moins la goulotte de remplissage, peuvent être monoblocs avec le réservoir. Alternativement, elles peuvent être fabriquées indépendamment du réservoir et sont rapportées au réservoir ultérieurement, par une opération connue sous le terme de manchonnage.

Le réservoir RCS ainsi équipé est ensuite monté sur le véhicule, en usine terminale, par une opération dite de coiffage, consistant à déposer le réservoir et ses tubulures sur une platine, appelée également luge, disposée sous le soubassement du véhicule, puis à monter l'ensemble sur le véhicule. C'est le cas aussi du réservoir de carburant. Lors de l'opération de préparation sur luge, la tubulure RCS peut être montée encliquetée sur le réservoir RCS. Il en va de même pour le réservoir de carburant.

Par exemple, pour un véhicule de tourisme, le réservoir RCS contenant l'agent réducteur peut avoir une capacité de 10 à 20 litres, alors que le réservoir de carburant a au moins une capacité deux fois plus grande. Les goulottes de remplissage sont dimensionnées également en conséquence. Comme précédemment mentionné, il est fréquemment prévu d'implanter les réservoirs de carburant et RCS dans le véhicule de façon à ce que leurs goulottes de remplissage respectives débouchent dans la même zone, au niveau de la trappe de remplissage du véhicule, de façon à n'avoir qu'une seule trappe de remplissage, aisément accessible, pour les deux types de fluide.

Dans cette configuration, il a été observé un risque accru de casse, ou à tout le moins d'affaissement, de la goulotte de remplissage du réservoir RCS lors de l'opération de coiffage simultané des deux réservoirs, du fait, notamment, de sa faible résistance du fait de son faible dimensionnement.

Il est connu de solidariser les deux goulottes ensemble en plus de la solidarisation sur leurs extrémités respectives formant têtes de remplissage. Ceci peut être fait par une patte d'interface avec une opération de vissage. Un positionnement de la patte d'interface est cependant difficile à obtenir et l'opération de vissage prend du temps et nécessite l'emploi d'un élément supplémentaire qu'est la vis. De plus, le vissage peut être déficient avec un pas de vis faussé, étant donné la faible accessibilité pour le monteur.

Le document DE4023094 décrit un réservoir de carburant pour automobiles, ce réservoir étant réalisé en matière plastique. Le réservoir en matière plastique intègre les conduits d'aération de service et de remplissage dans la tubulure de remplissage, afin d'éviter la présence de conduits séparés et de simplifier la fabrication de l'ensemble. Le document FR-A-3 034 052 décrit un ensemble de réservoirs de fluides, dont une première goulotte est fixée à une deuxième goulotte dans la zone de remplissage par des moyens de fixation comprenant une première partie fixée sur la première goulotte et reliée solidairement à une deuxième partie en forme de pince venant enserrer la deuxième goulotte sur la moitié de son pourtour. Les première et deuxième parties des moyens de fixation sont respectivement sur la tête de remplissage des première et deuxième goulottes. La partie en forme de pince est en C et se clippe en force sur le pourtour de la deuxième goulotte.

Cette solidarisation concerne les ouvertures des goulottes formant têtes de remplissage et ne garantit pas le positionnement du reste des goulottes l'une par rapport à l'autre. C'est justement ce que recherche la présente invention en complément ou non avec une telle solidarisation des têtes de remplissage. De plus, des moyens d'encliquetage montrés dans ce document peuvent se détacher par vibrations lors du roulage du véhicule en désolidarisant les goulottes l'une de l'autre

Par conséquent, le problème à la base de l'invention est, dans un véhicule automobile, pour deux goulottes respectivement de carburant et d'agent liquide s'étendant à proximité l'une de l'autre de solidariser les deux goulottes à distance de leur ouverture respective servant de tête de remplissage, la solidarisation devant être facile à mettre en œuvre et résistante en position lors du roulage du véhicule.

Pour atteindre cet objectif, il est prévu selon l'invention un ensemble d'une goulotte de carburant et d'une goulotte d'un agent liquide, les goulottes s'étendant au moins partiellement parallèlement l'une à l'autre à partir d'une ouverture respective de remplissage, l'ensemble étant muni de moyens de solidarisation des deux goulottes entre elles, de sorte que, à distance des ouvertures de remplissage, les moyens de solidarisation sont réalisés, d'une part, par une agrafe double traversant une première patte portée par une portion d'une ou solidarisée à une première goulotte parmi les goulottes de carburant et d'agent liquide et une portion d'une ou solidarisée à une deuxième goulotte parmi les goulottes de carburant et d'agent liquide et, d'autre part, par une deuxième patte solidarisée à une portion de ou solidarisée à la deuxième goulotte pénétrant dans au moins une rainure portée par la périphérie d'une portion de ou solidarisée à la première goulotte, les première et deuxième pattes étant espacées l'une de l'autre.

L'expression « la portion de ou solidarisée à une goulotte » signifie que la portion peut être une portion de la goulotte ou une portion solidarisée à la goulotte, par exemple une capacité de dégazage solidarisée à une goulotte respective.

Les première et deuxième pattes sont espacées. Il s'ensuit que la portion de ou solidarisée à la deuxième goulotte recevant l'agrafe double et la portion de ou solidarisée à la deuxième goulotte portant la deuxième patte peuvent être les mêmes si on considère la portion comme un élément dans sa globalité, par exemple une capacité de dégazage solidarisée à la deuxième goulotte, mais l'agrafage et le support de la deuxième patte se font à des endroits différents de l'élément, par exemple la capacité de dégazage.

L'effet technique est d'obtenir une solidarisation facilitée et résistante une fois effectuée entre les deux goulottes. Cette solidarisation n'est pas équivalente à la solidarisation par encliquetage réunissant les deux ouvertures de remplissage des deux goulottes mais peut venir en complément de cette solidarisation.

La solidarisation selon la présente invention se fait à distance des ouvertures de remplissage par deux moyens de solidarisation différents et espacés l'un de l'autre. Le premier moyen de solidarisation est effectué par une agrafe double traversant une première patte portée par une portion d'une ou solidarisée à une première goulotte parmi les goulottes de carburant et d'agent liquide et une portion d'une ou solidarisée à une deuxième goulotte. En effet, la portion peut être une portion de la première goulotte ou une portion d'un élément solidarisé à la première goulotte, par exemple une capacité de dégazage de la première goulotte, ce qui n'est pas limitatif.

Le deuxième moyen de solidarisation est une deuxième patte solidarisée à une portion de ou solidarisée à la deuxième goulotte pénétrant dans au moins une rainure portée par la périphérie d'une portion de ou solidarisée à la première goulotte. Les portions des première et deuxième goulottes peuvent faire partie d'une goulotte respective ou être sur un élément solidarisé à la première ou la deuxième goulotte, par exemple une capacité de dégazage de la deuxième goulotte, ce qui n'est pas limitatif.

Les premier et deuxième moyens sont disposés de manière à renforcer la solidarisation dans des directions différentes entre les première et deuxième goulottes. Le premier moyen peut laisser un jeu limité pour la solidarisation des deux goulottes pour compenser des différences de forme entre, d'une part, premières goulottes et, d'autre part, deuxièmes goulottes.

Le deuxième moyen avec solidarisation par insertion de la deuxième patte dans au moins une rainure permet de répondre aux dispersions de réalisation de la deuxième goulotte et des variations du parcours de la première goulotte.

Le fait que la première patte soit solidarisée à la première goulotte et que la deuxième patte soit solidarisée à la deuxième goulotte répartit la solidarisation sur les deux goulottes en établissant une symétrie de solidarisation entre premier et deuxième moyens de solidarisation.

La présente invention permet un gain d'un point de vissage par rapport à l'état de la technique. Ceci permet une simplification de l'emboutissage du passage de roue avec un gain d'un insert étanche soudé. Un tel ensemble peut être monté en zone de préparation mécanique sur une luge. Ceci permet une désolidarisation aisée puis un remontage facile de la solidarisation sans outil en service après-vente.

La solidarisation est obtenue relativement rapidement, d'une part, par passage de l'agrafe dans la première patte et dans une portion de ou solidarisée à la deuxième goulotte et, d'autre part, par insertion de la deuxième patte dans au moins une rainure portée par une portion de ou solidarisée à la première goulotte.

Avantageusement, l'agrafe est de forme allongée en comprenant à chacune de deux extrémités opposées une tête pointue suivie par une collerette plus intérieure à l'agrafe que la tête pointue associée, un espacement étant prévu entre chaque collerette et la tête pointue associée et correspondant, à une extrémité de l'agrafe, à une épaisseur de la première patte et, à l'autre extrémité de l'agrafe, à l'épaisseur de la portion de ou solidarisée à la deuxième goulotte, la collerette et la tête pointue associée enserrant entre elles respectivement la première patte ou la portion de ou solidarisée à la deuxième goulotte. Chacune des collerettes s'appliquent contre la pièce que la collerette enserre avec la tête pointue associée. Une possibilité de déplacement de l'agrafe perpendiculairement au trou de passage de l'agrafe est de ce fait très limité.

Avantageusement, la première patte est percée d'un trou oblong pour un passage de l'agrafe en son intérieur, le trou oblong s'étendant en longueur parallèlement à la première goulotte en laissant un jeu de rattrapage dans sa longueur pour un positionnement de l'agrafe en son intérieur. Le trou oblong confère une possibilité de réglage dans sa longueur.

Avantageusement, la portion de ou solidarisée à la deuxième goulotte est une portion d'une capacité de dégazage intégrée à la deuxième goulotte. La capacité de dégazage est avantageusement d'un seul tenant avec la deuxième goulotte en étant obtenue par soufflage.

Avantageusement, la tête pointue est une tête fendue conique ou à pans. Les deux parties de la tête fendue peuvent se rétracter l'une vers l'autre lors du passage dans le trou oblong puis s'écarter l'une de l'autre par rappel élastique à la sortie du trou oblong.

Avantageusement, la deuxième patte solidarisée à la deuxième goulotte est insérée entre et sous deux languettes s'étendant à distance de la périphérie de la portion de ou solidarisée à la première goulotte en étant ouvertes à leur extrémité libre pour une insertion des bords longitudinaux opposés de la deuxième patte sous une languette respective, la distance des languettes de la périphérie de la première goulotte correspondant à une épaisseur de la deuxième patte avec ajout d'un jeu juste suffisant pour une insertion de la deuxième patte dans la rainure présente sous chacune des languettes.

Avantageusement, la portion de ou solidarisée à la première goulotte portant les languettes est une capacité de dégazage solidarisée à la première goulotte par des moyens d'encliquetage amovibles.

Dans ce mode de réalisation contrairement de la capacité de dégazage intégrée à la deuxième goulotte qui peut être la goulotte de carburant, la capacité de dégazage de la première goulotte qui peut être la goulotte d'agent liquide est solidarisée de manière amovible avec la première goulotte. La capacité de dégazage de la deuxième goulotte peut être de dimension plus importante que la capacité de dégazage de la première goulotte, d'où une nécessité du renforcement de la solidarisation entre la deuxième goulotte et sa capacité de dégazage associée.

Avantageusement, la première goulotte est la goulotte d'agent liquide et la deuxième goulotte est la goulotte de carburant.

L'invention concerne un système formé d'un dispositif d'alimentation en carburant et d'un dispositif d'alimentation en agent liquide dans un véhicule automobile, chaque dispositif comprenant un réservoir alimenté par une goulotte, caractérisé en ce que les deux goulottes sont solidarisées entre elles et forment un tel ensemble. Le système est ainsi compact et capable de résister aux vibrations lors du roulage du véhicule automobile ou aussi un maintien en position des deux goulottes l'une par rapport à l'autre lors du montage.

Avantageusement, le dispositif d'alimentation en agent liquide est un dispositif d'alimentation en agent réducteur pour une réduction catalytique sélective.

D'autres caractéristiques, buts et avantages de la présente invention apparaîtront à la lecture de la description détaillée qui va suivre et au regard des dessins annexés donnés à titre d'exemples non limitatifs et sur lesquels :
- la figure 1 est une représentation schématique d'une solidarisation en deux points entre une goulotte de carburant et une goulotte d'agent liquide formant un ensemble selon la présente invention,
- la figure 2 est une représentation schématique d'une vue en perspective d'une capacité de dégazage solidarisée à la première goulotte étant une goulotte d'agent liquide portant une première patte de solidarisation avec la deuxième goulotte étant une goulotte de carburant par agrafage réalisant le premier point de solidarisation selon la présente invention,
- la figure 3 est une représentation schématique d'une vue en perspective d'une portion de la capacité de dégazage montrée à la figure 2 sous un autre angle de vue et en étant agrandie avec une agrafe positionnée dans un trou oblong pratiqué sur la première patte,
- la figure 4 est une représentation schématique d'une vue en perspective d'une capacité de dégazage solidarisée à la deuxième goulotte étant une goulotte de carburant et d'une capacité de dégazage solidarisée à la première goulotte étant une goulotte d'agent liquide, la capacité de dégazage de la deuxième goulotte portant une deuxième patte de solidarisation insérée dans au moins une rainure portée par la capacité de dégazage solidarisée à la première goulotte, la deuxième patte et ladite au moins une rainure réalisant le deuxième point de solidarisation selon la présente invention,
- la figure 5 est une représentation schématique d'une vue en perspective sous un autre angle de vue et agrandie par rapport à la figure 4 de la solidarisation entre deuxième patte et ladite au moins une rainure.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

En se référant à toutes les figures, la présente invention concerne un ensemble d'une goulotte de carburant 2 et d'une goulotte d'un agent liquide 1. Chaque goulotte peut former une unité déjà montée avec un réservoir respectif ou un réservoir respectif peut être postérieurement solidarisé avec chaque goulotte, les réservoirs n'étant pas montrés aux figures.

Les goulottes 1, 2 s'étendent sensiblement parallèlement l'une à l'autre au moins sur une portion de leur longueur à partir d'une ouverture respective de remplissage ou tête de remplissage. Il est possible que les têtes de remplissage des deux goulottes 1, 2 soient solidarisées ensemble, avantageusement par des moyens d'encliquetage comme deux anneaux ouverts solidarisés ensemble en entourant partiellement une tête de remplissage respective, mais ceci n'est pas forcément nécessaire dans le cadre de la présente invention.

L'ensemble est muni de moyens de solidarisation 3 à 6, 6a des deux goulottes 1, 2 entre elles pour maintenir les goulottes 1, 2 sur au moins une partie de leur longueur l'une par rapport à l'autre. Selon l'invention, à distance des ouvertures de remplissage donc en étant différents de possibles moyens de solidarisation des ouvertures de remplissage, les moyens de solidarisation 3 à 6, 6a sont réalisés, premièrement, par une agrafe 3 double traversant une première patte 4 portée par une portion 1a d'une ou solidarisée à une première goulotte 1 parmi les goulottes de carburant 2 et d'agent liquide 1 et une portion 2a d'une ou solidarisée à une deuxième goulotte 2 parmi les goulottes de carburant 2 et d'agent liquide 1.

Les moyens de solidarisation 3 à 6, 6a sont aussi réalisés, deuxièmement, par une deuxième patte 5 solidarisée à une portion 2a de ou solidarisée à la deuxième goulotte 2 pénétrant dans au moins une rainure 6 portée par la périphérie d'une portion 1a de ou solidarisée à la première goulotte 1.

Il y a donc deux points de solidarisation entre les deux goulottes 1, 2, les points de fixation étant espacés l'un de l'autre pour maintenir sur le plus de longueur possible les deux goulottes 1, 2 l'une par rapport à l'autre, ceci avantageusement parallèlement l'une à l'autre. Comme précédemment mentionné dans l'exposé de l'invention le mot portion désigne un élément dans son entité qui est solidarisé à une goulotte respective. Les deux points de solidarisation espacés se font à différents endroits de la portion, c'est-à-dire de l'élément solidarisé à une goulotte respective.

Les moyens de solidarisation 3 à 6, 6a peuvent directement solidariser les goulottes 1, 2 entre elles par des portions de goulotte. En alternative, la solidarisation peut concerner un élément associé à la goulotte. Par exemple, cet élément peut être une capacité de dégazage faisant partie ou non de la goulotte en étant soit d'un seul tenant avec une des deux goulottes 1, 2, comme par exemple une capacité de dégazage d'une goulotte de carburant 2 ou étant solidarisé, avantageusement de manière amovible, avec une des deux goulottes 1, 2.

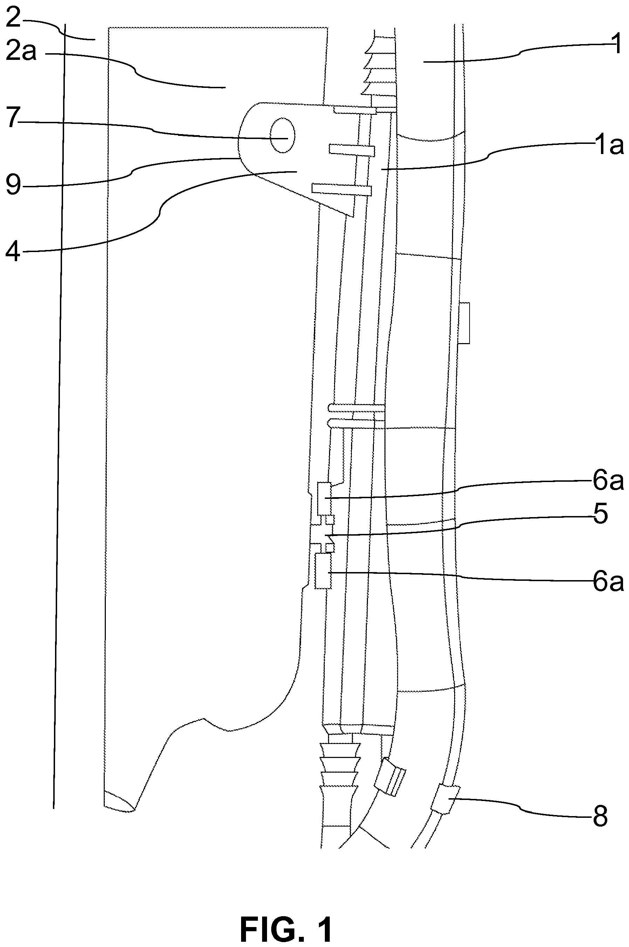

Ceci peut être le cas d'une capacité de dégazage de la goulotte d'agent liquide qui présente une capacité moins grande que la capacité de dégazage d'une goulotte de carburant 2 et qui peut être solidarisé par des moyens d'encliquetage 8 avec la goulotte d'agent liquide, ces moyens étant visibles à la figure 1. Ceci n'est pas limitatif.

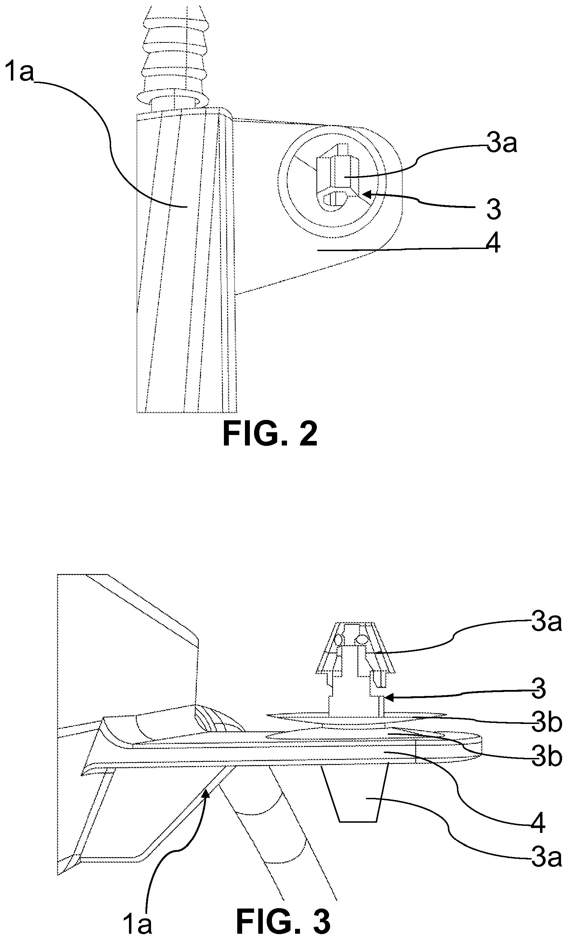

En se référant plus particulièrement aux figures 1 à 3, dans un mode de réalisation de l'agrafe 3, l'agrafe 3 peut être de forme allongée en comprenant à chacune de deux extrémités opposées une tête pointue 3a suivie par une collerette 3b plus intérieure à l'agrafe 3 que la tête pointue 3a associée.

Dans ce cas, un espacement peut être prévu entre chaque collerette 3b et la tête pointue 3a associée. Cet espacement peut correspondre, à une extrémité de l'agrafe 3, à une épaisseur de la première patte 4 et, à l'autre extrémité de l'agrafe 3, à l'épaisseur de la portion 2a de ou solidarisée à la deuxième goulotte 2. La collerette 3b et la tête pointue 3a associée peuvent enserrer entre elles respectivement la première patte 4 ou la portion 2a de ou solidarisée à la deuxième goulotte 2.

L'agrafe 3 est un moyen de solidarisation aussi efficace qu'une vis mais est plus facile à monter. Les deux collerettes 3b, effectuant un blocage en directions opposées l'une de l'autre, empêchent un mouvement de sortie de l'agrafe 3 de la première partie à une de ses extrémités et de la portion 2a de ou solidarisée à la deuxième goulotte 2 à son autre extrémité.

La première patte 4 peut être percée d'un trou oblong 7 pour un passage de l'agrafe 3 en son intérieur, visible à la figure 1 sans présence de l'agrafe. Le trou oblong 7 peut s'étendre en longueur parallèlement à la première goulotte 1 en laissant un jeu de rattrapage dans sa longueur pour un positionnement de l'agrafe 3 en son intérieur. Il est obtenu une facilité de montage, l'agrafe 3 pouvant avoir un jeu de positionnement dans le trou oblong 7, compte tenu des disparités de fabrication entre différentes premières goulottes 1 ou différentes deuxièmes goulottes 2.

Comme précédemment mentionné, la portion 2a de ou solidarisée à la deuxième goulotte 2 peut être une portion d'une capacité de dégazage 2a intégrée à la deuxième goulotte 2. La capacité de dégazage 2a de la deuxième goulotte 2 peut subir une adaptation de forme avec une partie de la capacité de dégazage 2a localement écrasée pour former une surface de réception plane 9 pour le passage de l'agrafe 3, cette surface de réception étant visible à la figure 1 en étant recouverte par la première patte 4.

La portion 2a peut aussi être solidarisée avec la deuxième goulotte 2 de manière amovible. Les goulottes 1, 2 sont avantageusement cylindriques et ne présentent pas une paroi épaisse. Il est donc préféré réaliser la solidarisation entre les goulottes 1, 2 par au moins un élément 1a, 2a solidarisé à une des deux goulottes 1, 2.

Dans ce contexte, il est préféré solidariser la capacité de dégazage 1a d'une 1 des deux goulottes 1, 2 avec la capacité de dégazage 2a de l'autre goulotte 2 afin d'avoir plus de place pour réaliser une solidarisation, d'une part, par une agrafe 3 et, d'autre part, par une deuxième patte 5 portée par la capacité de dégazage 2a de la deuxième goulotte 2 s'insérant dans au moins une rainure 6 en tant que logement porté par la capacité de dégazage 1a de la première goulotte 1.

Pour l'agrafe 3, la tête pointue 3a à chacune des extrémités de l'agrafe 3 est une tête fendue conique ou à pans. La tête fendue 3a permet une diminution de la dimension de la tête lors de son introduction dans un passage prévu dans la première patte 4 portée par la première goulotte 1 ou une portion 1a solidarisée avec la première goulotte 1 et dans une portion 2a de ou solidarisée à la deuxième goulotte 2. Les portions d'extrémité de la tête pointue 3a s'écartent les unes des autres après avoir traversé la première patte 4 ou la portion 2a de ou solidarisée à la deuxième goulotte 2.

Pour le deuxième point de fixation, en se référant plus particulièrement aux figures 1, 4 et 5, la deuxième patte 5 solidarisée à la deuxième goulotte 2 ou à une portion 2a solidarisée à la deuxième goulotte 2 peut être insérée entre et sous deux languettes 6a s'étendant à distance de la périphérie de la première goulotte 1ou d'une portion 1a solidarisée à la première goulotte 1.

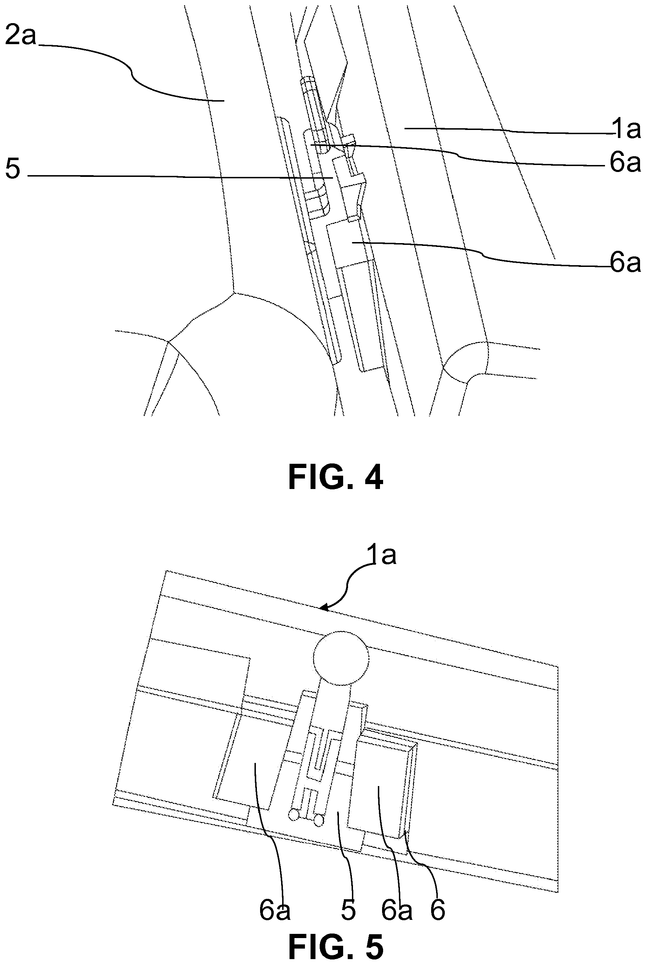

Une rainure 6, visible à la figure 5, peut être présente sous chacune des deux languettes 6a. Chacune des deux languettes 6a recouvre une portion d'un bord longitudinal de la deuxième patte 5. La solidarisation de la deuxième patte 5 à la deuxième goulotte ou à une portion 2a de la deuxième goulotte peut être obtenue par soudage.

Les deux languettes 6a peuvent être ouvertes à leur extrémité libre pour une insertion des bords longitudinaux opposés de la deuxième patte 5 sous une languette 6a respective. La distance espaçant chacune des languettes 6a de la périphérie de la première goulotte 1 ou de la portion 1a solidarisée à la première goulotte 1 peut correspondre à une épaisseur de la deuxième patte 5 avec ajout d'un jeu juste suffisant pour une insertion de la deuxième patte 5 sous chacune des languettes 6a afin que les bords longitudinaux de la deuxième patte 5 soient retenus par friction sous une languette 6a respective.

Cette solidarisation à deux languettes 6a et une deuxième patte 5 s'apparente à une liaison glissière qui peut présenter un léger rotulage possible pour la prise en compte des dispersions de parcours de la première goulotte 1.

Dans un mode de réalisation préférentielle de la présente invention, la portion 1a de ou solidarisée à la première goulotte 1 portant les languettes 6a peut être une capacité de dégazage 1a solidarisée à la première goulotte 1. Cette capacité de dégazage 1a peut être solidarisée par des moyens d'encliquetage 8 amovibles à la première goulotte 1, les moyens d'encliquetage étant visibles à la figure 1.

La première goulotte 1 peut être la goulotte d'agent liquide et la deuxième goulotte 2 peut être la goulotte de carburant 2. Les deux goulottes 1, 2 peuvent être de forme cylindrique, la goulotte de carburant 2 présentant un diamètre plus grand que la goulotte d'agent liquide. Quand des capacités de dégazage 1a, 2a sont présentes, la capacité de dégazage 2a de la goulotte de carburant 2 peut être de plus grande dimension que la capacité de dégazage 1a de la goulotte d'agent liquide 1.

La capacité de dégazage 2a de la goulotte de carburant 2 peut être d'un seul tenant avec la goulotte de carburant 2 en étant obtenue par soufflage tandis que la capacité de dégazage 1a de la goulotte d'agent liquide 1 peut être fixée à la goulotte d'agent liquide par des moyens d'encliquetage 8, par exemple du type anneau ouvert entourant partiellement la goulotte d'agent liquide, les extrémités de l'anneau ouvert s'écartant lors de l'insertion de l'anneau autour de la paroi extérieure de la goulotte d'agent liquide 1 puis l'anneau brisé étant maintenu par rappel élastique contre la paroi de la goulotte d'agent liquide 1.

L'invention concerne aussi un système formé d'un dispositif d'alimentation en carburant et d'un dispositif d'alimentation en agent liquide dans un véhicule automobile, chaque dispositif comprenant un réservoir alimenté par une goulotte. Dans ce système, les deux goulottes 1, 2 sont solidarisées entre elles et forment un ensemble tel que précédemment décrit.

Le système peut comprendre une capacité de dégazage 1a, 2a pour chacun des dispositifs d'alimentation, les capacités de dégazage étant solidarisées avec ou d'un seul tenant avec leur goulotte 1, 2 respective. La solidarisation entre les deux goulottes 1, 2 peut se faire entre les capacités de dégazage 1a, 2a respectives.

Dans une application préférentielle, le dispositif d'alimentation en agent liquide est un dispositif d'alimentation en agent réducteur pour une réduction catalytique sélective des oxydes d'azote évacués du moteur thermique par la ligne d'échappement.

Le dispositif d'alimentation en agent réducteur alimente un injecteur d'agent réducteur dans la ligne d'échappement. L'agent réducteur qui de préférence se transforme en ammoniac effectue la réduction des oxydes d'azote dans un catalyseur de réduction catalytique disposé en aval de l'injecteur dans la ligne d'échappement en se référant au parcours des gaz d'échappement.

L'invention n'est nullement limitée aux modes de réalisation décrits et illustrés qui n'ont été donnés qu'à titre d'exemples.

## Revendications

1. Ensemble d'une goulotte de carburant (2) et d'une goulotte d'un agent liquide (1), les goulottes (1, 2) s'étendant au moins partiellement parallèlement l'une à l'autre à partir d'une ouverture respective de remplissage, l'ensemble étant muni de moyens de solidarisation (3 à 6, 6a) des deux goulottes (1, 2) entre elles, de sorte que, à distance des ouvertures de remplissage, les moyens de solidarisation (3 à 6, 6a) sont réalisés, d'une part, par une agrafe (3) double traversant une première patte (4) portée par une portion (1a) d'une ou solidarisée à une première goulotte (1) parmi les goulottes de carburant (2) et d'agent liquide (1) et une portion (2a) d'une ou solidarisée à une deuxième goulotte (2) parmi les goulottes de carburant (2) et d'agent liquide (1) et, d'autre part, par une deuxième patte (5) solidarisée à une portion (2a) de ou solidarisée à la deuxième goulotte (2) pénétrant dans au moins une rainure (6) portée par la périphérie d'une portion (1a) de ou solidarisée à la première goulotte (1), les première et deuxième pattes (4, 5) étant espacées l'une de l'autre.

2. Ensemble selon la revendication 1, dans lequel l'agrafe (3) est de forme allongée en comprenant à chacune de deux extrémités opposées une tête pointue (3a) suivie par une collerette (3b) plus intérieure à l'agrafe (3) que la tête pointue (3a) associée, un espacement étant prévu entre chaque collerette (3b) et la tête pointue (3a) associée et correspondant, à une extrémité de l'agrafe (3), à une épaisseur de la première patte (4) et, à l'autre extrémité de l'agrafe (3), à l'épaisseur de la portion (2a) de ou solidarisée à la deuxième goulotte (2), la collerette (3b) et la tête pointue (3a) associée enserrant entre elles respectivement la première patte (4) ou la portion (2a) de ou solidarisée à la deuxième goulotte (2).

3. Ensemble selon la revendication 2, dans lequel la première patte (4) est percée d'un trou oblong (7) pour un passage de l'agrafe (3) en son intérieur, le trou oblong (7) s'étendant en longueur parallèlement à la première goulotte (1) en laissant un jeu de rattrapage dans sa longueur pour un positionnement de l'agrafe (3) en son intérieur.

4. Ensemble selon l'une quelconque des deux revendications précédentes, dans lequel la portion (2a) de ou solidarisée à la deuxième goulotte (2) est une portion d'une capacité de dégazage (2a) intégrée à la deuxième goulotte (2).

5. Ensemble selon l'une quelconque des trois revendications précédentes, dans lequel la tête pointue (3a) est une tête fendue conique ou à pans.

6. Ensemble selon l'une quelconque des revendications précédentes, dans lequel la deuxième patte (5) solidarisée à la portion (2a) de ou solidarisée à la deuxième goulotte (2) est insérée entre et sous deux languettes (6a) s'étendant à distance de la périphérie de la portion (1a) de ou solidarisée à la première goulotte (1) en étant ouvertes à leur extrémité libre pour une insertion des bords longitudinaux opposés de la deuxième patte (5) sous une languette (6a) respective, la distance des languettes (6a) de la périphérie de la portion (1a) de ou solidarisée à la première goulotte (1) correspondant à une épaisseur de la deuxième patte (5) avec ajout d'un jeu juste suffisant pour une insertion de la deuxième patte (5) dans la rainure (6) présente sous chacune des languettes (6a).

7. Ensemble selon la revendication précédente, dans lequel la portion (1a) de ou solidarisée à la première goulotte (1) portant les languettes (6a) est une capacité de dégazage (1a) solidarisée à la première goulotte (1) par des moyens d'encliquetage (8) amovibles.

8. Ensemble selon l'une quelconque des revendications précédentes, dans lequel la première goulotte (1) est la goulotte d'agent liquide et la deuxième goulotte (2) est la goulotte de carburant (2).

9. Système formé d'un dispositif d'alimentation en carburant et d'un dispositif d'alimentation en agent liquide dans un véhicule automobile, chaque dispositif comprenant un réservoir alimenté par une goulotte (1, 2), **caractérisé en ce que** les deux goulottes (1, 2) sont solidarisées entre elles et forment un ensemble selon l'une quelconque des revendications précédentes.

10. Système selon la revendication précédente, dans lequel le dispositif d'alimentation en agent liquide est un dispositif d'alimentation en agent réducteur pour une réduction catalytique sélective.

## Patentansprüche

1. Anordnung einer Brennstoffrutsche (2) und einer Flüssigkeitsmittelrutsche (1), wobei sich die Rutschen (1, 2) von einer jeweiligen Füllöffnung zumindest teilweise parallel zueinander erstrecken, wobei die Anordnung mit Sicherungsmitteln (3 bis 6, 6a) der beiden Rutschen (1, 2) zwischen ihnen, so dass in einem Abstand von den Füllöffnungen die Sicherungsmittel (3 bis 6, 6a) werden einerseits durch einen Doppelclip (3) erzeugt, der durch eine erste Lasche (4) verläuft, die von einem Teil (1a) einer getragen wird oder an einer ersten Rutsche (1) zwischen den Kraftstoffrutschen (2) und befestigt ist flüssiges Mittel (1) und ein Teil (2a) von einem oder einem Integral mit einer zweiten Rutsche (2) zwischen den Rutschen des Brennstoffs (2) und des flüssigen Mittels (1) und andererseits durch eine zweite Lasche (5) gesichert an einem Abschnitt (2a) von oder an der zweiten Rutsche (2) befestigt, der in mindestens eine Nut (6) eindringt, die von der Peripherie eines Abschnitts (1a) getragen wird oder an der ersten Rutsche (1) befestigt ist, der ersten und zweiten Beine (4, 5) sind voneinander beabstandet.

2. Anordnung nach Anspruch 1, wobei der Clip (3) eine längliche Form aufweist, die an jedem der beiden gegenüberliegenden Enden einen spitzen Kopf (3a) umfasst, gefolgt von einem Flansch (3b), der mehr im Inneren des Clips (3) liegt als der zugehörige spitze Kopf (3a), wobei ein Abstand zwischen jedem Flansch (3b) und dem zugehörigen spitzen Kopf (3a) vorgesehen ist und an einem Ende des Clips (3) einer Dicke der ersten Lasche (4) und am anderen Ende entspricht Ende des Clips (3) auf die Dicke des Abschnitts (2a) oder der Befestigung an der zweiten Rutsche (2), wobei der Kragen (3b) und der zugehörige spitze Kopf (3a) zwischen ihnen bzw der ersten Lasche (4) festgeklemmt sind) oder der Teil (2a) der zweiten Rutsche (2) oder an dieser befestigt.

3. Anordnung nach Anspruch 2, bei der die erste Lasche (4) mit einem länglichen Loch (7) zum Durchführen des Clips (3) in seinem Inneren durchbohrt ist, wobei sich das längliche Loch (7) parallel zur ersten Rutsche erstreckt (1), wobei ein Aufwickelspiel in seiner Länge verbleibt, um den Clip (3) darin zu positionieren.

4. Anordnung nach einem der beiden vorhergehenden Ansprüche, bei der der Teil (2a) der zweiten Rutsche (2) oder ein integraler Bestandteil der zweiten Rutsche (2) ein Teil einer Entgasungskapazität (2a) ist, die in die zweite Rutsche (2) integriert ist.

5. Anordnung nach einem der drei vorhergehenden Ansprüche, bei der der spitze Kopf (3a) ein sich verjüngender oder geschlitzter Kopf ist.

6. Anordnung nach einem der vorhergehenden Ansprüch, bei der die zweite Lasche (5), die an dem Abschnitt (2a) der zweiten Rutsche (2) befestigt ist oder an der zweiten Rutsche (2) befestigt ist, zwischen und unter zwei Zungen (6a) eingeführt wird, die sich in einem Abstand erstrecken. des Umfangs des Abschnitts (1a) oder der Befestigung an der ersten Rutsche (1) durch Öffnen an ihrem freien Ende zum Einführen der gegenüberliegenden Längskanten der zweiten Lasche (5) unter eine jeweilige Zunge (6a) den Abstand Zungen (6a) des Umfangs des Abschnitts (1a) oder an der Premi- Ära- Rutsche (1) befestigt, die einer Dicke des zweiten Schenkels (5) entspricht, wobei gerade noch genügend Spiel zum Einsetzen der zweiten Lasche (5) hinzugefügt wird in der Nut (6) vorhanden unter jedem der Zungen (6a).

7. Anordnung gemäß dem vorhergehenden Anspruch, bei der der Teil (1a) der ersten Rutsche (1), der die Laschen (6a) trägt, an dieser befestigt ist oder eine Entgasungskapazität (1a) aufweist, die an der ersten Rutsche (1) mittels eines abnehmbaren Schnappverschlusses befestigt ist -Schlösser (8).

8. Anordnung nach einem vorhergehenden Anspruch, wobei die erste Rutsche (1) die Flüssigkeitsmittelrutsche und die zweite Rutsche (2) die Kraftstoffrutsche (2) ist.

9. System, das aus einer Kraftstoffzufuhrvorrichtung und einer Flüssigkeitsmittelzufuhrvorrichtung in einem Kraftfahrzeug gebildet ist, wobei jede Vorrichtung einen Tank umfasst, der von einer Rutsche (1, 2) versorgt wird, **dadurch gekennzeichnet, dass** die beiden Rutschen (1, 2) miteinander verbunden sind und eine bilden Montage nach einem der vorstehenden Ansprüche.

10. System nach dem vorhergehenden Anspruch, bei dem die Flüssigmittelzufuhrvorrichtung eine Reduktionsmittelzufuhrvorrichtung zur selektiven katalytischen Reduktion ist.

## Claims

1. Assembly of a fuel chute (2) and a liquid agent chute (1), the chutes (1, 2) extending at least partially parallel to each other from a respective filling opening, the assembly being provided with securing means (3 to 6, 6a) of the two chutes (1, 2) between them, so that, at a distance from the filling openings, the securing means (3 to 6, 6a) are produced, on the one hand, by a double clip (3) passing through a first tab (4) carried by a portion (1a) of one or secured to a first chute (1) among the fuel chutes (2) and liquid agent (1) and a portion (2a) of one or integral with a second chute (2) among the fuel (2) and liquid agent (1) chutes and, on the other hand, by a second tab (5) secured to a portion (2a) of or secured to the second chute (2) penetrating into at least one groove (6) carried by the periphery of a portion (1a) of or secured to the first chute (1), the first and second legs (4, 5) being spaced from each other.

2. Assembly according to claim 1, wherein the clip (3) is elongated in shape comprising at each of two opposite ends a pointed head (3a) followed by a flange (3b) more interior to the clip (3) than the associated pointed head (3a), a spacing being provided between each flange (3b) and the associated pointed head (3a) and corresponding, at one end of the clip (3), to a thickness of the first tab (4) and, at the other end of the clip (3), to the thickness of the portion (2a) of or secured to the second chute (2), the collar (3b) and the associated pointed head (3a) clamping between they respectively the first tab (4) or the portion (2a) of or secured to the second chute (2).

3. Assembly according to Claim 2, in which the first tab (4) is pierced with an oblong hole (7) for a passage of the clip (3) in its interior, the oblong hole (7) extending in parallel length to the first chute (1), leaving a take-up play in its length for positioning the clip (3) inside it.

4. Assembly according to any one of the two preceding claims, in which the portion (2a) of or integral with the second chute (2) is a portion of a degassing capacity (2a) integrated in the second chute (2).

5. Assembly according to any one of the three preceding claims, in which the pointed head (3a) is a tapered or slotted head.

6. Assembly according to any one of the preceding claims, in which the second tab (5) secured to the portion (2a) of or secured to the second chute (2) is inserted between and under two tongues (6a) extending at a distance of the periphery of the portion (1a) of or secured to the first chute (1) by being open at their free end for insertion of the opposite longitudinal edges of the second tab (5) under a respective tongue (6a), the distance tongues (6a) of the periphery of the portion (1a) or secured to the first chute (1) corresponding to a thickness of the second leg (5) with the addition of just sufficient play for insertion of the second tab (5) in the groove (6) present under each of the tongues (6a).

7. Assembly according to the preceding claim, in which the portion (1a) of or secured to the first chute (1) carrying the tabs (6a) is a degassing capacity (1a) secured to the first chute (1) by means of removable snap-locks (8).

8. Assembly according to any preceding claim, wherein the first chute (1) is the liquid agent chute and the second chute (2) is the fuel chute (2).

9. System formed of a fuel supply device and a liquid agent supply device in a motor vehicle, each device comprising a tank supplied by a chute (1, 2), **characterized in that** the two chutes (1, 2) are joined together and form an assembly according to any one of the preceding claims.

10. System according to the preceding claim, in which the liquid agent supply device is a reducing agent supply device for selective catalytic reduction.
